# EUROPÄISCHE PATENTSCHRIFT

(11) **EP 4 454 982 B1**
(45) Veröffentlichungstag und Bekanntmachung des Hinweises auf die Patenterteilung: **28.01.2026**
(21) Anmeldenummer: 24172096.0
(22) Anmeldetag: 24.04.2024
(51) Int. Cl.: B62J 45/413, B62M 6/45

(54) **VERFAHREN ZUM STEUERN EINER ANTRIEBSEINRICHTUNG**
METHOD FOR CONTROLLING A DRIVE DEVICE
PROCÉDÉ DE COMMANDE D'UN DISPOSITIF D'ENTRAÎNEMENT

(30) Priorität: 27.04.2023 DE 102023203911
(43) Veröffentlichungstag der Anmeldung: 30.10.2024
(73) Patentinhaber: ZF Friedrichshafen AG, 88046 Friedrichshafen (DE)
(72) Erfinder: Schraff, Uwe, 88677 Markdorf (DE); Griesmeier, Uwe, 88677 Markdorf (DE); Hodrius, Thomas, 88171 Weiler-Simmerberg (DE); Riess, Günter, 88097 Eriskirch / Mariabrunn (DE); Wiemer, Michel, 88250 Weingarten (DE); Jungaberle, Alexander, 88281 Schlier (DE); Wallner, Markus, 88046 Friedrichshafen (DE); Schenk, Manfred, 88046 Friedrichshafen (DE); Seidel, Peter, 88094 Oberteuringen (DE)
(74) Vertreter: ZF Friedrichshafen AG

(56) Entgegenhaltungen:
- EP-A1- 2 471 705
- US-A1- 2017 129 341
- US-A1- 2020 262 512
- US-A1- 2023 104 630

## Beschreibung

### Technisches Gebiet

Die vorliegende Erfindung betrifft ein Verfahren zum Steuern einer Antriebseinrichtung. Insbesondere bezieht sich die vorliegende Erfindung auf ein Verfahren zum Steuern einer Antriebseinrichtung zur Unterstützung eines zumindest zeitweise durch Muskelkraft betreibbaren Fahrzeugs. Außerdem bezieht sich die vorliegende Erfindung auf eine Steuerungsvorrichtung zur Steuerung einer Antriebseinrichtung sowie ein Fahrzeug mit einer Antriebseinrichtung, die mit einer derartigen Steuerungsvorrichtung ausgestattet ist.

### Stand der Technik

Fahrzeuge, die zumindest zeitweise durch Muskelkraft betreibbar sind und eine Antriebseinrichtung zur Unterstützung der Muskelkraft aufweisen, sind bekannt. Insbesondere sind solche Fahrzeuge in der Form von E-Bikes beziehungsweise Pedelecs bekannt, bei denen die Antriebseinrichtung einen Elektromotor zur Unterstützung der Muskelkraft aufweist. Herkömmlich werden solche Fahrzeuge derart gesteuert, dass die Muskelkraft beispielsweise in der Form eines in eine Kurbeleinrichtung eingeleiteten Drehmoments erfasst wird und die Antriebseinrichtung zur Unterstützung des Antriebs auf der Grundlage des erfassten Drehmoments gesteuert wird. Bei solchen Fahrzeugen ist grundsätzlich die Einleitung einer bestimmten Muskelkraft erforderlich, damit die Antriebseinrichtung eine unterstützende Antriebskraft bereitstellt.

EP 2 471 705 A1 betrifft ein kraftunterstütztes System für Fahrräder. Dieses umfasst einen Mikrocomputer, Sensoren und eine Datenbank, um die Hilfskraft basierend auf Trittfrequenz, Fahrgeschwindigkeit und Schaltposition zu steuern. Der Mikrocomputer bestimmt die geeignete Hilfskraftstufe und steuert das Gerät zur Ausgabe der Hilfskraft.

### Darstellung der Erfindung

Gemäß einem ersten Aspekt ist ein Verfahren zum Steuern einer Antriebseinrichtung zur Unterstützung eines zumindest zeitweise durch Muskelkraft betreibbaren Fahrzeugs mit einem Antriebsrad, das durch von der Antriebseinrichtung bereitgestellte Antriebskraft antreibbar ist, und mit einer Kurbeleinrichtung, die von einem Fahrer des Fahrzeugs drehbar ist, vorgesehen, wobei das Verfahren die folgenden Schritte aufweist:
Abfragen des Vorliegens eines vorbestimmten Betriebsmodus der Antriebseinrichtung, der von dem Fahrer des Fahrzeugs vorgebbar ist; Erfassen einer Drehzahl des Antriebsrads; Erfassen einer Drehzahl der Kurbeleinrichtung; Bestimmen eines Synchronlaufs bezüglich der Drehzahl des Antriebsrads und der Drehzahl der Kurbeleinrichtung auf der Basis eines Übersetzungsverhältnisses zwischen der Kurbeleinrichtung und dem Antriebsrad; und Ansteuern der Antriebseinrichtung mit einer vorgegebenen Antriebsleistung unabhängig von einer in die Kurbeleinrichtung eingeleiteten Muskelkraft, wenn der vorbestimmte Betriebsmodus vorliegt und bestimmt wird, dass der Synchronlauf vorliegt.

Die Antriebseinrichtung kann eine elektrische Maschine aufweisen, die durch Aufnahme von elektrischer Leistung mechanische Leistung abgeben und auf das Antriebsrad aufbringen kann. Das zumindest zeitweise durch Muskelkraft betreibbare Fahrzeug kann als Fahrrad, insbesondere als Pedelec beziehungsweise E-Bike, ausgestaltet sein. Das Fahrzeug kann zwei oder mehr Räder aufweisen. Die Kurbeleinrichtung des Fahrzeugs kann mit dem Antriebsrad des Fahrzeugs über ein Übertragungsmittel verbunden sein. Das Übertragungsmittel kann eine Kette, ein Riemen oder Ähnliches sein. Die Kurbeleinrichtung kann mit einem vorbestimmten Übersetzungsverhältnis mit dem Antriebsrad gekoppelt sein. Das Übersetzungsverhältnis kann ein unveränderliches Übersetzungsverhältnis sein. Das Übersetzungsverhältnis kann alternativ veränderlich sein. Wenn das Übersetzungsverhältnis veränderlich ist, kann das Übersetzungsverhältnis gestuft oder stufenlos veränderlich sein. Das Übersetzungsverhältnis kann auf der Grundlage einer Vorgabe des Fahrers des Fahrzeugs veränderlich sein. Das Übersetzungsverhältnis kann alternativ oder zusätzlich automatisch veränderlich sein, wobei eine Steuerungseinrichtung zur Einstellung des Übersetzungsverhältnisses zwischen der Kurbeleinrichtung und dem Antriebsrad vorgesehen sein kann. Das Übersetzungsverhältnis zwischen der Kurbeleinrichtung und dem Antriebsrad kann direkt oder indirekt als Information bereitgestellt werden, die für das Verfahren ausgewertet werden kann.

Im Kraftübertragungspfad zwischen der Kurbeleinrichtung und dem Antriebsrad kann zumindest ein Freilauf vorgesehen sein. Der Freilauf kann dabei derart ausgestaltet sein, dass eine Kraftübertragung von der Kurbeleinrichtung auf das Antriebsrad in einer Richtung ermöglicht wird, die einer Vorwärtsfahrt zugeordnet ist. Bei Rotation der Kurbeleinrichtung in einer Richtung, die entgegengesetzt zu der Drehrichtung der Kurbeleinrichtung ist, die der Vorwärtsrichtung zugeordnet ist, kann durch den Freilauf eine Entkopplung zwischen der Kurbeleinrichtung und dem Antriebsrad vorgesehen sein. Die Antriebseinrichtung kann die Antriebskraft direkt oder indirekt auf das Antriebsrad übertragen.

Der vorbestimmte Betriebsmodus kann von dem Fahrer des Fahrzeugs über eine Eingabevorrichtung vorgebbar sein. Die Drehzahl des Antriebsrads kann durch einen Drehzahlsensor erfasst werden, der die Drehzahl des Antriebsrads direkt oder indirekt erfassen kann. Die Informationen bezüglich der Drehzahl des Antriebsrads kann für das Verfahren zur Auswertung bereitgestellt werden. Die Drehzahl der Kurbeleinrichtung kann durch einen Sensor erfasst werden, der die Drehzahl der Kurbeleinrichtung direkt oder indirekt erfassen kann. Die Information bezüglich der Drehzahl der Kurbeleinrichtung kann für das Verfahren zur Auswertung bereitgestellt werden.

Der Synchronlauf bezüglich der Drehzahl des Antriebsrads und der Drehzahl der Kurbeleinrichtung auf der Basis eines Übersetzungsverhältnisses zwischen der Kurbeleinrichtung und dem Antriebsrad liegt vor, wenn die Drehzahl der Kurbeleinrichtung derjenigen Drehzahl entspricht, die beim Antrieb des Fahrzeugs durch Betrieb mit Muskelkraft vorliegt. Dabei kann die Information bezüglich des vorliegenden Übersetzungsverhältnisses eingesetzt werden, um das Vorliegen des Synchronlaufs zu bestimmen, wenn das Übersetzungsverhältnis variabel ist. Der Synchronlauf liegt beispielsweise dann vor, wenn bei einem Übersetzungsverhältnis bezüglich der Drehzahl des Antriebsrads und der Drehzahl der Kurbeleinrichtung eins zu zwei beträgt und die Drehzahl des Antriebsrads das Zweifache der Drehzahl der Kurbeleinrichtung beträgt.

Beim Ansteuern der Antriebseinrichtung mit einer vorgegebenen Antriebsleistung unabhängig von einer in die Kurbeleinrichtung eingeleiteten Muskelkraft wird auch dann Antriebsleistung von der Antriebseinrichtung zum Antrieb des Fahrzeugs abgegeben, wenn die Kurbeleinrichtung durch den Fahrer gedreht wird, aber keine oder im Wesentlichen keine Muskelkraft in die Kurbeleinrichtung eingeleitet wird.

Gemäß einer Ausführungsform erfolgt nämlich das Ansteuern der Antriebseinrichtung mit der vorgegebenen Antriebsleistung, wenn die Kurbeleinrichtung im Wesentlichen ohne Krafteinleitung gedreht wird. Dabei ist es zulässig, dass eine geringfügige Krafteinleitung in die Kurbeleinrichtung erfolgt, die beispielsweise für den Antrieb der Übertragungseinrichtung zwischen der Kurbeleinrichtung und dem Antriebsrad erforderlich ist. Eine Drehung der Kurbeleinrichtung im Wesentlichen ohne Krafteinleitung liegt dann vor, wenn die in die Kurbeleinrichtung eingeleitete Kraft im Verhältnis zu der gesamten Antriebskraft des Fahrzeugs sehr gering oder vernachlässigbar ist.

Gemäß einer Ausführungsform kann das Vorliegen des Synchronlaufs bezüglich der Drehzahl des Antriebsrads und der Drehzahl der Kurbeleinrichtung zumindest dann bestimmt werden, wenn die Drehzahl der Kurbeleinrichtung einer Synchrondrehzahl entspricht, die sich aus der Drehzahl des Antriebsrads und dem Übersetzungsverhältnis zwischen der Kurbeleinrichtung und dem Antriebsrad ergibt. Dabei kann das Übersetzungsverhältnis als bekannte Information verwendet werden, um zu bestimmen, ob die Drehzahl der Kurbeleinrichtung der Synchrondrehzahl entspricht. Die Synchrondrehzahl der Kurbeleinrichtung liegt dann vor, wenn die Drehzahl der Kurbeleinrichtung der Drehzahl entspricht, die sich beim Antrieb des Fahrzeugs durch die Kurbeleinrichtung mit dem vorliegenden Übersetzungsverhältnis einstellen würde. Das Vorliegen des Synchronlaufs kann auch dann bestimmt werden, wenn die Drehzahl der Kurbeleinrichtung geringfügig niedriger als die Synchrondrehzahl ist. In diesem Fall hebt der im Kraftübertragungspfad zwischen der Kurbeleinrichtung und dem Antriebsrad vorgesehene Freilauf ab, so dass von der Kurbeleinrichtung keine Kraft auf das Antriebsrad übertragen werden kann.

Gemäß einer Ausführungsform kann das Vorliegen des Synchronlaufs bezüglich der Drehzahl des Antriebsrads und der Drehzahl der Kurbeleinrichtung bestimmt werden, wenn die Drehzahl der Kurbeleinrichtung innerhalb eines Drehzahlbereichs von der Synchrondrehzahl bis zu einer Grenzdrehzahl liegt, wobei die Grenzdrehzahl geringer ist als die Synchrondrehzahl. In dieser Ausführungsform ist vorgesehen, dass eine geringfügige Abweichung der Drehzahl der Kurbeleinrichtung von der Synchrondrehzahl zulässig ist, um das Vorliegen des Synchronlaufs zu bestimmen.

Gemäß einer Ausführungsform kann beim Ansteuern der Antriebseinrichtung mit einer vorgegebenen Antriebsleistung die vorgegebene Antriebsleistung eine maximal abgebbare Leistung oder eine voreingestellte Leistung sein, die geringer als die maximal abgebbare Leistung der Antriebseinrichtung ist. Die in der Antriebseinrichtung vorgesehene elektrische Maschine kann eine Nennleistung abgeben, die einer Maximalleistung entsprechen kann. Die Maximalleistung kann dabei so bestimmt werden, dass diese Leistung über eine vorbestimmte Zeitdauer ohne Beeinträchtigung der Funktion der Antriebseinrichtung von der Antriebseinrichtung abgegeben werden kann. Wenn die vorgegebene Antriebsleistung eine voreingestellte Leistung ist, die geringer als die maximal abgebbare Leistung der Antriebseinrichtung ist, kann diese auf einen festen Wert oder auf einen variablen Wert einstellbar sein. Die Einstellung der voreingestellten Leistung kann von dem Fahrer des Fahrzeugs vorgegeben werden.

Gemäß einer Ausführungsform kann beim Ansteuern der Antriebseinrichtung mit einer vorgegebenen Antriebsleistung die vorgegebene Antriebsleistung mit einem vorbestimmten Verlauf eingestellt werden. Für den Fall, dass die Antriebseinrichtung derart angesteuert wird, dass diese eine vorgegebene Antriebsleistung, beispielsweise die maximal abgebbare Leistung, abgibt, ist es vorteilhaft, die Antriebsleistung mit einem Gradienten, der einen vorbestimmten Wert nicht übersteigt, auf die maximale Leistung zu erhöhen. Auf diese Weise können übermäßige Schlupfwerte an dem Antriebsrad aufgrund zu starker Beschleunigungswerte verhindert werden. Dabei kann der vorbestimmte Verlauf, mit dem die vorgegebene Antriebsleistung eingestellt wird, ein zeitlicher Verlauf sein. Insbesondere kann der vorbestimmte Verlauf als Rampe dargestellt werden, bei dem die Antriebsleistung mit einem linearen Gradienten bezogen auf die Zeit erhöht wird. Alternativ können andere funktionale Zusammenhänge eingesetzt werden, solange die Sicherheit beim Betrieb des Fahrzeugs gewährleistet wird.

Gemäß einer Ausführungsform kann das Ansteuern der Antriebseinrichtung mit einer vorgegebenen Antriebsleistung erfolgen, wenn die Drehzahl der Kurbeleinrichtung einer vorbestimmten Mindestdrehzahl entspricht. Dabei wird die Mindestdrehzahl derart gewählt, dass eine zufällige oder unbeabsichtigte Rotation der Kurbeleinrichtung für das Ansteuern der Antriebseinrichtung unberücksichtigt bleibt.

Gemäß einer Ausführungsform kann das Ansteuern der Antriebseinrichtung mit einer vorgegebenen Antriebsleistung erfolgen, wenn die Drehung der Kurbeleinrichtung mindestens während einer vorbestimmten Mindestdauer erfasst wird. In diesem Fall wird die Mindestdauer derart eingerichtet, dass eine zufällige oder unbeabsichtigte Drehung der Kurbeleinrichtung über eine kurze Zeitdauer für das Ansteuern der Antriebseinrichtung unberücksichtigt bleibt.

Gemäß einem weiteren Aspekt ist eine Steuerungsvorrichtung zur Steuerung einer Antriebseinrichtung zur Unterstützung eines zumindest zeitweise durch Muskelkraft betreibbaren Fahrzeugs vorgesehen, die eine Eingabeschnittstelle zur Aufnahme von Signalen, die sich zumindest auf eine Drehzahl eines Antriebsrads, eine Drehzahl einer Kurbeleinrichtung und eine Abfrage des Vorliegens eines vorbestimmten Betriebsmodus des Fahrzeugs beziehen, mit einer Ausgabeschnittstelle zur Ausgabe von Signalen zur Ansteuerung der Antriebseinrichtung und einer Rechnereinheit zur Bestimmung eines Synchronlaufs bezüglich der Drehzahl des Antriebsrads und der Drehzahl der Kurbeleinrichtung versehen ist, wobei die Steuerungsvorrichtung zur Ausführung des Verfahrens mit einem oder mehreren der vorstehend definierten Merkmale eingerichtet ist. Die Steuerungsvorrichtung kann eine separate Einheit sein, die an dem Fahrzeug montierbar ist. Alternativ kann die Steuerungsvorrichtung in eine Steuerungseinheit zur gesamten Steuerung des Fahrzeugs integriert sein.

Gemäß einem weiteren Aspekt ist ein Fahrzeug vorgesehen, das eine Antriebseinrichtung zur Unterstützung eines zumindest zeitweise durch Muskelkraft erfolgenden Antriebs und eine Steuerungseinrichtung gemäß dem vorstehenden genannten Aspekt aufweist. Das Fahrzeug kann dabei ein Fahrrad mit einem Vorderrad und einem Hinterrad sein, wobei zumindest eines von dem Vorderrad und dem Hinterrad als Antriebsrad ausgestaltet ist. Das Fahrzeug kann ferner eine elektrische Energiespeichereinheit aufweisen, die zur Übertragung von elektrischer Leistung mit der Antriebseinrichtung gekoppelt ist. Das Fahrzeug kann alternativ ein Mehrspurfahrzeug mit einem oder mehreren Antriebsrädern sein.

Bei dem Fahrrad kann im Kraftübertragungspfad zwischen der Kurbeleinrichtung und dem Antriebsrad ein Getriebe vorgesehen sein, das ein Übersetzungsverhältnis zwischen der Kurbeleinrichtung und dem Antriebsrad zur Verfügung stellt. Das Getriebe kann dabei ein gestuftes Getriebe sein, das mehrere auswählbare Übersetzungsverhältnisse bereitstellen kann. Alternativ kann das Getriebe ein stufenloses Getriebe sein, das in einem Übersetzungsverhältnisbereich variabel Übersetzungsverhältnisse bereitstellen kann. Bei dem Fahrrad können die Übersetzungsverhältnisse manuell, elektromechanisch oder auf sonstige Weise durch eine Eingabe des Fahrers vorgegeben werden. Alternativ können die Übersetzungsverhältnisse automatisch von einer hierfür vorgesehenen Steuerung vorgegeben werden. In jedem Fall ist die Information bezüglich des vorliegenden Übersetzungsverhältnisses für die Ausführung des Verfahrens gemäß der vorstehend genannten Beschreibung des Grundkonzeptes verfügbar.

### Kurze Beschreibung der Zeichnung

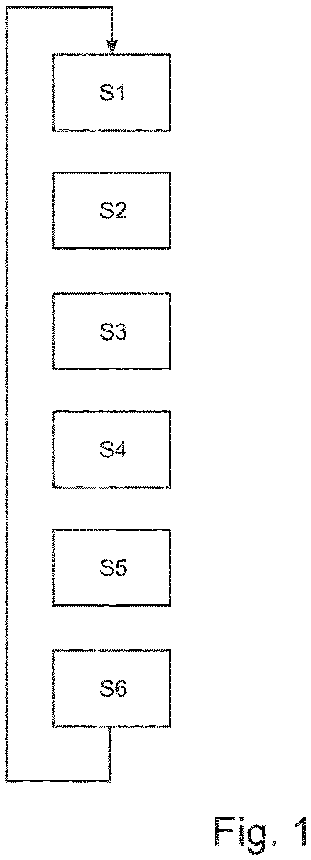

- Fig. 1: zeigt ein schematisches Diagramm zur Darstellung der von dem Verfahren ausgeführten Schritte gemäß einer Ausführungsform.

### Detaillierte Beschreibung einer Ausführungsform

Im Folgenden wird eine Ausführungsform des Verfahrens beschrieben und zunächst ein Aufbau eines hierfür geeigneten beispielhaften Fahrzeugs erläutert, das in der Zeichnung nicht gezeigt ist. In der hier beschriebenen Ausführungsform wird davon ausgegangen, dass das Fahrzeug als Pedelec beziehungsweise E-Bike mit einem Vorderrad und einem Hinterrad ausgestaltet ist. Das als Fahrrad ausgeführte Fahrzeug ist in den Figuren nicht dargestellt.

Bei dem beispielhaften als Pedelec beziehungsweise E-Bike ausgestalteten Fahrrad ist das Hinterrad als Antriebsrad vorgesehen und ist das Vorderrad in üblicher Weise als lenkbares und nicht angetriebenes Laufrad vorgesehen. Das Fahrrad weist neben einem Lenker, einem Sattel, einer Bremseinrichtung und weiteren erforderlichen Elementen eine Kurbeleinrichtung und eine Antriebseinrichtung auf. Die Antriebseinrichtung weist in der vorliegenden Ausführungsform eine elektrische Maschine auf, die mit dem Antriebsrad derart gekoppelt ist, dass die Antriebsleistung der elektrischen Maschine auf das Antriebsrad übertragen werden kann. Die elektrische Maschine wird dabei über einen Schaltkreis mit elektrischer Leistung von einer an dem Fahrrad vorgesehenen elektrischen Energiespeichervorrichtung versorgt.

Die Kurbeleinrichtung ist als Kurbel mit Pedalen ausgestaltet, die von dem Fahrer des Fahrrads rotiert werden kann, so dass die Kurbeleinrichtung sich dreht. Die Kurbeleinrichtung ist in der vorliegenden Ausführungsform über einen Kettenantrieb mit dem als Antriebsrad ausgestalteten Hinterrad verbunden. Dabei ist in der vorliegenden Ausführungsform an einer Nabe des Hinterrads ein schaltbares Getriebe vorgesehen, mit dem ein Übersetzungsverhältnis zwischen der Kurbeleinrichtung und dem Hinterrad in üblicher Weise in Stufen eingestellt werden kann. Die Auswahl der Übersetzungsverhältnisse erfolgt dabei über eine Bedieneinheit, die an dem Lenker vorgesehen und von dem Fahrer des Fahrrads betätigbar ist.

Das Fahrrad weist ferner einen Drehzahlsensor zur Erfassung einer Drehzahl der Kurbeleinrichtung auf. Ferner weist das Fahrrad einen Drehzahlsensor zur Erfassung einer Drehzahl des Hinterrads auf. Zudem ist eine Bestimmungseinrichtung vorgesehen, die das gegenwärtig ausgewählte Übersetzungsverhältnis zwischen der Kurbeleinrichtung und dem Antriebsrad bestimmen kann und das Ergebnis für das Verfahren zur Verfügung stellt. Die Signale bzw. Informationen bezüglich der Drehzahl des Hinterrads, der Drehzahl der Kurbeleinrichtung und des gegenwärtig ausgewählten Übersetzungsverhältnisses zwischen der Kurbeleinrichtung und dem Hinterrad werden einer an dem Fahrrad vorgesehenen Steuerungsvorrichtung zugeführt.

An dem Hinterrad ist gemäß der vorliegenden Ausführungsform ein Freilauf vorgesehen, der schließt, wenn die Kurbeleinrichtung für eine Vorwärtsfahrt rotiert wird, während er öffnet, wenn das Fahrrad rollt, während die Kurbeleinrichtung nicht rotiert wird.

Bei einem bestimmten Übersetzungsverhältnis ergibt sich zwischen der Drehzahl der Kurbeleinrichtung und der Drehzahl des Hinterrads ein entsprechendes Verhältnis. So wird für ein vorbestimmtes Übersetzungsverhältnis ein Synchronlauf zwischen der Kurbeleinrichtung und dem Hinterrad jedenfalls dann erzielt, wenn das Fahrrad durch Aufbringen von Muskelkraft in die Kurbeleinrichtung gefahren wird. In diesem Zustand ist der Freilauf an der Nabe des Hinterrads geschlossen. Die dann vorliegende Drehzahl der Kurbeleinrichtung wird als Synchrondrehzahl der Kurbeleinrichtung bezeichnet. Für den Fall, dass die Drehzahl der Kurbeleinrichtung geringer als die Synchrondrehzahl ist, hebt der Freilauf an der Nabe des Hinterrads ab und wird keine Kraft von der Kurbeleinrichtung auf das Hinterrad übertragen.

Im Folgenden wird das Verfahren zum Steuern der Antriebseinrichtung gemäß einer Ausführungsform anhand von Fig. 1 erläutert. Das Verfahren wird zyklisch in vorbestimmten Zeitintervallen wiederholt ausgeführt. Gemäß der vorliegenden Ausführungsform wird das als Pedelec oder E-Bike ausgestaltete Fahrrad in einem Betriebsmodus betrieben, in welchem beim Aufbringen eines Drehmoments über die Kurbeleinrichtung die Antriebseinrichtung zur Unterstützung des Muskelkraftbetriebs betrieben wird. Wenn der Fahrer des Fahrrads über eine Eingabevorrichtung einen vorbestimmten Betriebsmodus auswählt, der beispielsweise als eCruise-Betriebsmodus bezeichnet wird, kann das Fahrrad in einem Betriebsmodus betrieben werden, in welchem die Unterstützung durch die Antriebseinrichtung auch ohne Aufbringen einer Muskelkraft in Form von Drehmoment über die Pedale auf die Kurbeleinrichtung erfolgen kann. Das Vorliegen dieses als eCruise-Betriebsmodus bezeichneten Modus wird in einem Schritt S1 abgefragt. Wenn das Vorliegen des eCruise-Betriebsmodus in Schritt S1 bestimmt wird, wird in einem folgenden Schritt S2 die Drehzahl des Antriebsrads erfasst. Hierzu wird der am Antriebsrad vorgesehene Drehzahlsensor abgefragt. Im demselben Zusammenhang wird in einem Schritt S3 die Drehzahl der Kurbeleinrichtung erfasst. Hierzu wird der an der Kurbeleinrichtung vorgesehene Drehzahlsensor abgefragt. In einem nachfolgenden Schritt S4 wird das Vorliegen des Synchronlaufs bezüglich der Kurbeleinrichtung und des Antriebsrads bestimmt. Hierzu wird zunächst das vorliegende Übersetzungsverhältnis zwischen der Kurbeleinrichtung und dem Antriebsrad bestimmt, indem der Schaltzustand des Schaltgetriebes abgefragt wird. Auf der Grundlage des erfassten Übersetzungsverhältnisses zwischen der Kurbeleinrichtung und dem Antriebsrad wird in Schritt S4 somit bestimmt, ob die Drehzahl der Kurbeleinrichtung der Synchrondrehzahl entspricht, die beim Antrieb des Antriebsrads durch die Kurbeleinrichtung bei dem vorliegenden Übersetzungsverhältnis vorliegen sollte. Für den Fall, dass die Synchrondrehzahl der Kurbeleinrichtung bestimmt wird, wird als Ergebnis des Schritts S4 das Vorliegen des Synchronlaufs bestimmt. Dabei wird in dem vorliegenden eCruise-Betriebsmodus die Bestimmung der Antriebskraft an der Kurbeleinrichtung nicht berücksichtigt. Mit anderen Worten wird der erfasste Wert der in die Kurbeleinrichtung eingeleiteten Antriebskraft unberücksichtigt gelassen. In einem nachfolgenden Schritt S5 wird die vorgegebene Antriebsleistung abgefragt. Hierzu wird eine Abfrage vorgenommen, welche Antriebsleistung für den eCruise-Betriebsmodus anzuwenden ist. Für den Fall, dass die vorgegebene Antriebsleistung gegenwärtig die maximale Antriebsleistung der Antriebseinrichtung ist, wird die maximale Antriebsleistung als vorgegebene Antriebsleistung eingesetzt. Für einen abweichenden Fall, in welchem als vorgegebene Antriebsleistung eine Antriebsleistung bestimmt wurde, die geringer als die maximale Antriebsleistung ist, wird die verringerte Antriebsleistung als vorgegebene Antriebsleistung verwendet. Ob die vorgegebene Antriebsleistung die maximale Antriebsleistung der Antriebseinrichtung ist oder eine verringerte Antriebsleistung, kann von dem Fahrer über eine Eingabevorrichtung vorgegeben werden.

In der vorliegenden Ausführungsform wird sodann in einem Schritt S6 die Antriebseinrichtung derart angesteuert, dass die vorgegebene Antriebsleistung von der Antriebseinrichtung abgegeben wird. In der vorliegenden Ausführungsform wird hierzu ausgehend von der vorliegenden Antriebsleistung, die in einem Anfahrvorgang gegebenenfalls 0 beträgt, die Antriebsleistung auf die maximale Antriebsleistung der Antriebseinrichtung über eine Rampenfunktion erhöht. Insofern wird die Antriebsleistung mit einer linearen Funktion bezogen auf die Zeit erhöht. Dabei kann durch diese Vorgehensweise verhindert werden, dass das Fahrzeug durch schlagartiges Einstellen der maximalen Antriebsleistung der Antriebseinrichtung übermäßig stark beschleunigt wird, wodurch sich ein übermäßiger Schlupf am Antriebsrad ergeben könnte. Die Form und Ausprägung, beispielsweise die Steigung der Rampe der Rampenfunktion oder auch ob die Rampe linear oder nicht linear ausgeprägt ist, ist in der Steuerung hinterlegt und kann gegebenenfalls durch den Fahrer mittels Konfiguration individualisiert werden. Eine nicht lineare Ausprägung der Rampenfunktion kann beispielsweise einen tangentialen Anfang und ein tangentiales Ende aufweisen, welches auch als S-Schlag bezeichnet wird.

In dem vorliegenden eCruise-Betriebsmodus kann der Fahrer somit die Kurbeldrehzahl intuitiv auf der Synchrondrehzahl halten, so dass der an der Nabe des Hinterrads vorgesehene Freilauf gerade nicht abhebt. In dieser Betriebsart bringt der Fahrer nur eine äußerst geringe Antriebskraft auf die Kurbeleinrichtung auf, die für den Vortrieb des Fahrzeugs vernachlässigbar ist und lediglich Reibungsverluste an der Übertragungseinrichtung zwischen der Kurbeleinrichtung und dem Antriebsrad ausgleicht. In dieser Betriebsart kann der Fahrer mit einer maximalen Antriebsleistung der Antriebseinrichtung fahren, ohne selbst Antriebskraft in die Kurbeleinrichtung einzuleiten. Für den Fall, dass der Fahrer zusätzlich Antriebsleistung in die Kurbeleinrichtung einleiten möchte, kann er dies zu jedem Zeitpunkt tun. Jedoch kann in dem vorliegenden Betriebsmodus eine Fahrweise erzielt werden, die besonders kräfteschonend für den Fahrer ist und gleichzeitig eine hohe Fahrgeschwindigkeit zur Verfügung stellt.

In der vorliegenden Ausführungsform wird die vorgegebene Antriebskraft der Antriebseinrichtung bereitgestellt, wenn die Synchrondrehzahl an der Kurbeleinrichtung vorliegt. In einer abgewandelten Ausführungsform kann die vorgegebene Antriebsleistung von der Antriebseinrichtung bereitgestellt werden, wenn die Drehzahl der Kurbeleinrichtung geringfügig geringer als die Synchrondrehzahl ist. In diesem Fall hebt der an der Nabe des Hinterrads vorgesehene Freilauf ab, so dass zwischen der Kurbeleinrichtung und dem Hinterrad keine Kraftübertragung vorliegt. Für den Schritt S4 zur Bestimmung des Vorliegens des Synchronlaufs wird in dieser alternativen Ausführungsform vorgesehen, dass auch dann das Vorliegen des Synchronlaufs bestimmt wird, wenn die Drehzahl der Kurbeleinrichtung geringfügig geringer als die Synchrondrehzahl der Kurbeleinrichtung ist. In der vorliegenden Ausführungsform kann diese Abweichung beispielsweise auf 5% gesetzt werden, was bedeutet, dass auch dann das Vorliegen des Synchronlaufs bestimmt wird, wenn die Drehzahl der Kurbeleinrichtung um 5% geringer als die Synchrondrehzahl ist. Andere Abweichungen können ohne weiteres angewendet werden.

In einer weiteren Ausführungsform ist vorgesehen, dass beispielsweise beim Anfahrvorgang ausgehend vom Stillstand zunächst ein Vortrieb über die Kurbeleinrichtung erfolgt. Hierzu ist in der vorliegenden Ausführungsform vorgesehen, dass bei Bestimmung des Vorliegens des eCruise-Betriebsmodus die vorgegebene Antriebsleistung von der Antriebseinrichtung erst dann abgegeben wird, wenn die Kurbeleinrichtung eine Mindestdrehzahl erreicht hat. So wird in dieser Ausführungsform das Anfahren durch Muskelkraft vorgenommen und ab einer vorbestimmten Drehzahl der Kurbeleinrichtung die Antriebskraft von der Antriebseinrichtung bereitgestellt. Mit dieser Ausführungsform wird verhindert, dass bei Vorliegen des eCruise-Betriebsmodus schon bei sehr geringen Drehzahlen der Kurbeleinrichtung die vorgegebene beispielsweise maximale Antriebsleistung der Antriebseinrichtung aufgebracht wird. Die Mindestdrehzahl der Kurbeleinrichtung, ab der bei Vorliegen des eCruise-Betriebsmodus eine Antriebsleistung von der Antriebseinrichtung abgegeben werden kann, kann auf einen kleinen Wert von beispielsweise 10 Umdrehungen pro Minute eingerichtet werden. Andere Werte sind selbstverständlich möglich, solange auch ein langsames Fahren ohne automatisches Aufbringen der vorgegebenen Antriebskraft von der Antriebseinrichtung möglich ist. Es ist auch möglich den Anfahrvorgang in klassischer Pedelec-Variante, bei welcher das Fahrerpedalmoment verstärkt wird, durchzuführen und dann in den beschriebenen eCruise-Modus zu wechseln. Dies ist insbesondere bei Berganfahrten vorteilhaft.

In den vorstehend genannten Ausführungsbeispielen wurde das Verfahren auf ein als E-Bike beziehungsweise Pedelec ausgestaltetes Fahrzeug angewendet. Das Konzept ist in gleichem Maße auf andere Fahrzeuge anwendbar, beispielsweise Mehrspurfahrzeuge mit einem oder mehreren Antriebsrädern, solange das Grundkonzept der vorliegenden Erfindung verwirklicht werden kann. In weiteren Ausführungsbeispielen kann ein unveränderliches Übersetzungsverhältnis zwischen Kurlebeinrichtung und Antriebsrad vorgesehen sein. In weiteren Ausführungsformen kann das Vorderrad des Fahrzeugs mit der Antriebseinrichtung antreibbar sein und das Hinterrad mit der Kurbeleinrichtung gekoppelt sein. In weiteren Ausführungsformen können Übersetzungsverhältnisse mit entsprechenden Getriebevorrichtungen gestuft oder stufenlos eingestellt werden.

### Bezugszeichen

- S1: Bestimmen Betriebsmodus
- S2: Erfassen Drehzahl Antriebsrad
- S3: Erfassen Drehzahl Kurbeleinrichtung
- S4: Bestimmen Synchronlauf
- S5: Abfrage vorgegebene Antriebsleistung
- S6: Ansteuern Antriebseinrichtung

## Patentansprüche

1. Verfahren zum Steuern einer Antriebseinrichtung zur Unterstützung eines zumindest zeitweise durch Muskelkraft betreibbaren Fahrzeugs mit einem Antriebsrad, das durch von der Antriebseinrichtung bereitgestellte Antriebskraft antreibbar ist, und mit einer Kurbeleinrichtung, die von einem Fahrer des Fahrzeugs drehbar ist, mit den folgenden Schritten:
(S1) Abfragen des Vorliegens eines vorbestimmten Betriebsmodus der Antriebseinrichtung, der von dem Fahrer des Fahrzeugs vorgebbar ist;
(S2) Erfassen einer Drehzahl des Antriebsrads;
(S3) Erfassen einer Drehzahl der Kurbeleinrichtung;
(S4) Bestimmen eines Synchronlaufs bezüglich der Drehzahl des Antriebsrads und der Drehzahl der Kurbeleinrichtung auf der Basis eines Übersetzungsverhältnisses zwischen der Kurbeleinrichtung und dem Antriebsrad; **gekennzeichnet durch** den Schritt:
(S6) Ansteuern der Antriebseinrichtung mit einer vorgegebenen Antriebsleistung unabhängig von einer in die Kurbeleinrichtung eingeleiteten Muskelkraft, wenn der vorbestimmte Betriebsmodus vorliegt und bestimmt wird, dass der Synchronlauf vorliegt.

2. Verfahren nach Anspruch 1, **dadurch gekennzeichnet, dass** das Ansteuern (S6) der Antriebseinrichtung mit der vorgegebenen Antriebsleistung erfolgt, wenn die Kurbeleinrichtung im Wesentlichen ohne Krafteinleitung gedreht wird.

3. Verfahren nach Anspruch 1 oder 2, **dadurch gekennzeichnet, dass** das Vorliegen des Synchronlaufs bezüglich der Drehzahl des Antriebsrads und der Drehzahl der Kurbeleinrichtung zumindest dann bestimmt wird, wenn die Drehzahl der Kurbeleinrichtung einer Synchrondrehzahl entspricht, die sich aus der Drehzahl des Antriebsrads und dem Übersetzungsverhältnis zwischen der Kurbeleinrichtung und dem Antriebsrad ergibt.

4. Verfahren nach Anspruch 3, wobei das Vorliegen des Synchronlaufs bezüglich der Drehzahl des Antriebsrads und der Drehzahl der Kurbeleinrichtung bestimmt wird, wenn die Drehzahl der Kurbeleinrichtung innerhalb eines Drehzahlbereichs von der Synchrondrehzahl bis zu einer Grenzdrehzahl liegt, wobei die Grenzdrehzahl geringer ist als die Synchrondrehzahl.

5. Verfahren nach einem der vorhergehenden Ansprüche, **dadurch gekennzeichnet, dass** beim Ansteuern der Antriebseinrichtung mit einer vorgegebenen Antriebsleistung die vorgegebene Antriebsleistung eine maximal abgebbare Leistung oder eine voreingestellte Leistung ist, die geringer als die maximal abgebbare Leistung der Antriebseinrichtung ist.

6. Verfahren nach einem der vorhergehenden Ansprüche, **dadurch gekennzeichnet, dass** beim Ansteuern der Antriebseinrichtung mit einer vorgegebenen Antriebsleistung die vorgegebene Antriebsleistung mit einem vorbestimmten Verlauf eingestellt wird.

7. Verfahren nach einem der vorhergehenden Ansprüche, **dadurch gekennzeichnet, dass** das Ansteuern der Antriebseinrichtung mit einer vorgegebenen Antriebsleistung erfolgt, wenn die Drehzahl der Kurbeleinrichtung einer vorbestimmten Mindestdrehzahl entspricht.

8. Verfahren nach einem der vorhergehenden Ansprüche, **dadurch gekennzeichnet, dass** das Ansteuern der Antriebseinrichtung mit einer vorgegebenen Antriebsleistung erfolgt, wenn die Drehung der Kurbeleinrichtung mindestens während einer vorbestimmten Mindestdauer erfasst wird.

9. Steuerungsvorrichtung zur Steuerung einer Antriebseinrichtung zur Unterstützung eines zumindest zeitweise durch Muskelkraft betreibbaren Fahrzeugs mit einer Eingabeschnittstelle zur Aufnahme von Signalen, die sich zumindest auf eine Drehzahl eines Antriebsrads, eine Drehzahl einer Kurbeleinrichtung und eine Abfrage des Vorliegens eines vorbestimmten Betriebsmodus des Fahrzeugs beziehen, mit einer Ausgabeschnittstelle zur Ausgabe von Signalen zur Ansteuerung der Antriebseinrichtung und einer Rechnereinheit zur Bestimmung eines Synchronlaufs bezüglich der Drehzahl des Antriebsrads und der Drehzahl der Kurbeleinrichtung, wobei die Steuerungsvorrichtung zur Ausführung des Verfahrens nach einem der vorhergehenden Ansprüche eingerichtet ist.

10. Fahrzeug mit einer Antriebseinrichtung zur Unterstützung eines zumindest zeitweise durch Muskelkraft erfolgenden Antriebs und mit einer Steuerungseinrichtung nach Anspruch 9.

## Claims

1. Method for controlling a drive device for assisting a vehicle which can be operated by muscle power at least at times, the vehicle having a drive wheel, which can be driven by drive force provided by the drive device, and having a crank device, which can be turned by a rider of the vehicle, the method comprising the following steps:
(S1) checking for the presence of a predetermined operating mode of the drive device, which operating mode can be specified by the rider of the vehicle;
(S2) detecting a speed of the drive wheel;
(S3) detecting a speed of the crank device;
(S4) determining synchronization with respect to the speed of the drive wheel and the speed of the crank device on the basis of a transmission ratio between the crank device and the drive wheel;
**characterized by** the step:
(S6) actuating the drive device with a specified drive power independently of muscle power introduced into the crank device if the predetermined operating mode is present and it is determined that there is synchronization.

2. Method according to Claim 1, **characterized in that** the drive device is actuated (S6) with the specified drive power if the crank device is turned substantially without introduction of force.

3. Method according to Claim 1 or 2, **characterized in that** the presence of synchronization with respect to the speed of the drive wheel and the speed of the crank device is determined at least when the speed of the crank device corresponds to a synchronous speed which is given by the speed of the drive wheel and the transmission ratio between the crank device and the drive wheel.

4. Method according to Claim 3, wherein the presence of synchronization with respect to the speed of the drive wheel and the speed of the crank device is determined if the speed of the crank device lies within a speed range from the synchronous speed to a limit speed, wherein the limit speed is lower than the synchronous speed.

5. Method according to any of the preceding claims, **characterized in that**, when actuating the drive device with a predetermined drive power, the specified drive power is a maximum outputtable power or a preset power, which is lower than the maximum outputtable power of the drive device.

6. Method according to any of the preceding claims, **characterized in that**, when the drive device is actuated with a specified drive power, the specified drive power is set with a predetermined profile.

7. Method according to any of the preceding claims, **characterized in that** the drive device is actuated with a specified drive power if the speed of the crank device corresponds to a predetermined minimum speed.

8. Method according to any of the preceding claims, **characterized in that** the drive device is actuated with a specified drive power if turning of the crank device is detected at least for a predetermined minimum duration.

9. Control apparatus for controlling a drive device for assisting a vehicle which can be operated by muscle power at least at times, having an input interface for receiving signals which relate at least to a speed of a drive wheel, a speed of a crank device and a check for the presence of a predetermined operating mode of the vehicle, having an output interface for outputting signals for actuating the drive device and a computer unit for determining synchronization with respect to the speed of the drive wheel and the speed of the crank device, wherein the control apparatus is configured to carry out the method according to any of the preceding claims.

10. Vehicle having a drive device for assisting driving performed by muscle power at least at times, and having a control apparatus according to Claim 9.

## Revendications

1. Procédé de commande d'un dispositif d'entraînement destiné à l'assistance d'un véhicule pouvant fonctionner au moins temporairement par force musculaire, comprenant une roue motrice pouvant être entraînée par la force d'entraînement fournie par le dispositif d'entraînement et comprenant un dispositif à manivelle pouvant être entraîné en rotation par un conducteur du véhicule, comprenant les étapes suivantes :
(S1) interrogation concernant la présence d'un mode de fonctionnement prédéterminé du dispositif d'entraînement, qui peut être spécifié par le conducteur du véhicule ;
(S2) détection d'une vitesse de rotation de la roue motrice ;
(S3) détection d'une vitesse de rotation du dispositif à manivelle ;
(S4) détermination d'un fonctionnement synchrone par rapport à la vitesse de rotation de la roue motrice et à la vitesse de rotation du dispositif à manivelle sur la base d'un rapport de démultiplication entre le dispositif à manivelle et la roue motrice ;
**caractérisé par** l'étape suivante :
(S6) commande du dispositif d'entraînement avec une puissance d'entraînement spécifiée indépendamment d'une force musculaire introduite dans le dispositif à manivelle, lorsque le mode de fonctionnement prédéterminé est présent et qu'il est déterminé que le fonctionnement synchrone est présent.

2. Procédé selon la revendication 1, **caractérisé en ce que** la commande (S6) du dispositif d'entraînement avec la puissance d'entraînement spécifiée a lieu lorsque le dispositif à manivelle est mis en rotation sensiblement sans application de force.

3. Procédé selon la revendication 1 ou 2, **caractérisé en ce que** la présence du fonctionnement synchrone par rapport à la vitesse de rotation de la roue motrice et à la vitesse de rotation du dispositif à manivelle n'est au moins déterminée que lorsque la vitesse de rotation du dispositif à manivelle correspond à une vitesse de rotation synchrone, qui résulte de la vitesse de rotation de la roue motrice et du rapport de démultiplication entre le dispositif à manivelle et la roue motrice.

4. Procédé selon la revendication 3, dans lequel la présence du fonctionnement synchrone par rapport à la vitesse de rotation de la roue motrice et à la vitesse de rotation du dispositif à manivelle est déterminée lorsque la vitesse de rotation du dispositif à manivelle se situe dans une plage de vitesses de rotation allant de la vitesse de rotation synchrone à une vitesse de rotation limite, la vitesse de rotation limite étant inférieure à la vitesse de rotation synchrone.

5. Procédé selon l'une quelconque des revendications précédentes, **caractérisé en ce que**, lors de la commande du dispositif d'entraînement avec une puissance d'entraînement spécifiée, la puissance d'entraînement spécifiée est une puissance de sortie maximale ou une puissance préréglée qui est inférieure à la puissance de sortie maximale du dispositif d'entraînement.

6. Procédé selon l'une quelconque des revendications précédentes, **caractérisé en ce que**, lors de la commande du dispositif d'entraînement avec une puissance d'entraînement spécifiée, la puissance d'entraînement spécifiée est réglée selon une courbe prédéterminée.

7. Procédé selon l'une quelconque des revendications précédentes, **caractérisé en ce que** la commande du dispositif d'entraînement est effectuée avec une puissance d'entraînement spécifiée lorsque la vitesse de rotation du dispositif à manivelle correspond à une vitesse de rotation minimale prédéterminée.

8. Procédé selon l'une quelconque des revendications précédentes, **caractérisé en ce que** la commande du dispositif d'entraînement avec une puissance d'entraînement spécifiée a lieu lorsque la rotation du dispositif à manivelle est détectée au moins pendant une durée minimale prédéterminée.

9. Dispositif de commande permettant de commander un dispositif d'entraînement destiné à l'assistance d'un véhicule pouvant être actionné au moins temporairement par force musculaire, comprenant une interface d'entrée permettant d'acquérir des signaux qui sont relatifs à au moins une vitesse de rotation d'une roue motrice, une vitesse de rotation d'un dispositif à manivelle, et une interrogation concernant la présence d'un mode de fonctionnement prédéterminé du véhicule, comprenant une interface de sortie destinée à fournir en sortie des signaux de commande du dispositif d'entraînement et une unité informatique destinée à déterminer un fonctionnement synchrone par rapport à la vitesse de rotation de la roue motrice et à la vitesse de rotation du dispositif à manivelle, le dispositif de commande étant conçu pour mettre en œuvre le procédé selon l'une quelconque des revendications précédentes.

10. Véhicule comprenant un dispositif d'entraînement pour l'assistance d'un entraînement se produisant au moins temporairement par force musculaire, et comprenant un dispositif de commande selon la revendication 9.
